# EUROPÄISCHE PATENTSCHRIFT

(11) **EP 1 280 662 B1**
(45) Veröffentlichungstag und Bekanntmachung des Hinweises auf die Patenterteilung: **24.09.2003**
(21) Anmeldenummer: 01931679.3
(22) Anmeldetag: 03.05.2001
(51) Int. Cl.: B32B 5/30, D04B 21/04, A41D 31/02

(54) **TEXTILES ABSTANDSMATERIAL MIT INTERGRIERTEM LATENTSPEICHERMATERIAL**
TEXTILE ISOLATING MATERIAL WITH INTEGRATED LATENT HEAT STORAGE MATERIAL
MATIERE TEXTILE DE SEPARATION A SUBSTANCE D'ACCUMULATION DE CHALEUR LATENTE INTEGREE

(30) Priorität: 09.05.2000 DE 10022287
(43) Veröffentlichungstag der Anmeldung: 05.02.2003
(73) Patentinhaber: Rubitherm GmbH, 20457 Hamburg (DE)
(72) Erfinder: FIELD, Alan, 21224 Rosengarten (DE); FIEBACK, Klaus, 10245 Berlin (DE); BÜTTNER, Dirk-Carsten, 12207 Berlin (DE); SCHOLZ, Sören, 22147 Hamburg (DE)
(74) Vertreter: Müller, Enno, Dipl.-Ing.
(86) Internationale Anmeldenummer: EP0104898
(87) Internationale Veröffentlichungsnummer: WO01085442

(56) Entgegenhaltungen:
- WO-A-96/32526
- DE-A- 19 907 314
- DE-U- 9 016 062
- US-A- 5 851 338
- US-A- 6 004 662
- PATENT ABSTRACTS OF JAPAN vol. 1996, no. 12, 26. Dezember 1996 (1996-12-26) & JP 08 197659 A (TORAY IND INC), 6. August 1996 (1996-08-06)

## Beschreibung

Die Erfindung betrifft ein mehrlagiges textiles Abstandsmaterial, wie ein Abstandsgewebe oder ein Abstandsgewirke.

Derartige Abstandsmaterialien sind bereits in mehrfachen Ausführungsformen bekannt geworden. Es wird bspw. verwiesen auf EP 339 227 B1/DE 31 39 402 A1 und US-PS 3 481 427. Insbesondere wird auf die DE 196 35 170 C1 verwiesen.

Ein solches Abstandsmaterial kann neben technischen Materialien, wie insbesondere Glasfaser oder Carbonfaser, insbesondere aus hautfreundlichen Materialien wie etwa Polyesterseide bestehen. Insbesondere dann, wenn das Abstandsmaterial feuchteleitend und absorbierend, im Hinblick auf eine Anwendung auf der menschlichen Haut, sein soll. Hier kann insbesondere auch als abstandshaltende und sogleich feuchteleitende Fäden Dreikomponenten-Zwirn verwendet sein. Dieser Dreikomponenten-Zwirn kann aus einem monofilen Polyesterseiden-Polfaden, vorzugsweise in Durchmessern < 0,1 mm, einem nativen Faserstoff oder einem filamentierten Synthesefaserstoff und/oder mit besonders feuchteleitendem Querschnitt und generell mindestens aus einem Fixierfaden bestehen. Das Abstandsmaterial kann hierbei unterschiedliche Seitenflächen ausbilden. Einmal eine Feuchte aufnehmende körpernahe Fläche. Diese besteht bevorzugt aus einem synthetischen, nicht absorbierenden textilen Material. Und aus einer feuchteabgebenden, körperfernen Fläche, die aus einem absorbierenden textilen Material bevorzugt besteht.

Derartige Abstandsmaterialien sollen noch weiter verbessert werden. Insbesondere im Hinblick auf Wärmeanwendungen.

Hierzu schlägt die Erfindung vor, dass zwischen den Lagen des Abstandsmaterial Teilchen eines Latentwärmespeichermaterials angeordnet sind, wobei das Latentwärmespeichermaterial auf Basis eines Paraffins, versetzt mit einem Verdickungsmittel wie bspw. Karton G gebildet ist.

Es handelt sich auch vorzugsweise um unverkleidete "nackte Teilchen", die unmittelbar aus dem genannten Material bestehen. Dadurch, dass ein Verdickungsmittel vorgesehen ist, ergibt sich kein Auslaufen und Verlaufen des Paraffins mehr im geladenen Zustand des Speichermaterials, d.h. bei Schmelztemperatur des Paraffins. Es ist aber auch kein eigenes, etwa in das Teilchen noch eingezogenes Strukturmaterial notwendig. In bevorzugter Ausführung kann es sich bei dem Verdickungsmittel um ein Styrol-Block-Copolymer handeln. Im Einzelnen um ein solches, das unter dem Handelsnamen Kraton G erhältlich ist. Jedenfalls ist es bevorzugt, hier Diblock-, Triblock-, Radialblock- und/oder Multiblock-Copolymere einzusetzen. Dies führt zu einer festen oder geleeartigen Struktur des Teilchens aus Latentwärmespeichermaterial. Insbesondere hat sich gezeigt, dass auch bei Anwendung auf Textilen hiermit Waschvorgänge unproblematisch sind. Das Latentwärmespeichermaterial leidet hierunter nicht.

Hinsichtlich des Paraffins kann es sich um sehr verschiedenartige, unter diesem Begriff zusammenzufassende Stoffe handeln. In der Regel sind es feste paraffinische Kohlenwasserstoffe (Makro-Paraffine, Intermediat-Paraffine, mikrokristalline Wachse). Bekanntlich werden feste, paraffinische Kohlenwasserstoffe in der Regel aus Vakuumdestillationsfraktionen durch verschiedene technologische Trennschritte gewonnen, die einen gewissen Ölanteil bedingen. Dieser kann durchaus enthalten sein. Darüber hinaus kann es sich auch um synthetische Paraffine handeln, die im Fischer-Tropsch-Verfahren gewonnen sind. Derartige FT-Paraffine bestehen vornehmlich nur aus Normal-Paraffinen. Mehr als 90 % sind gewöhnlich N-Alkane. Der Rest sind Iso-Alkane. Die Kettenlänge liegt bei C 30 bis ewa C 100, bei einer Gradation (auch Erstarrungspunkt, EP) von ca. 86° bis 105° C. Darüber hinaus gibt es aber auch derartige FT-Paraffine mit Erstarrungspunkten im Bereich von 30 bis 80° C. Zu FT-Paraffinen allgemein wird auch bspw. auf die Literaturstelle A. Kühnle in "Fette, Seifen, Anstrichmittel 1982, Seiten 156 bis 162 verwiesen.

Das Verdickungsmittel kann je nach Bedarf zugesetzt werden. Ein üblicher Anteil ist 10 bis 15 % bezogen auf die Gesamtmasse eines hier beschriebenen Teilchens. Wesentlich ist, dass bei Nässebeaufschlagung, insbesondere auch bei Waschvorgängen, kein Auslösen des Paraffins auftritt.

Die Arbeitstemperatur, d.h. der Temperaturbereich, bei welchem die Wärme ohne eine Erhöhung der Temperatur des Latentwärmespeicherteilchens gespeichert wird oder ausgespeichert wird, kann durch Wahl des geeigneten Paraffins vorgegeben werden. Hier kommt es auf den Schmelzpunkt des Paraffins an.

Durch Zugabe derartiger Latenwärmespeichermaterial-Teilchen zu dem textilen Abstandsmaterial ergibt sich zugleich ein Latentwärmespeichereffekt. Dadurch, dass das Latentwärmespeichermaterial aus jeweils kleinen Teilchen besteht, kann es durch die den Zwischenraum zwischen den Lagen des textilen Materials überbrückenden Fäden bereits gehalten werden.

Es ist zunächst möglich, diese Teilchen des Latentwärmespeichermaterials so klein auszubilden, dass sie durch die übliche Maschenweite einer solchen Außenlage eines entsprechenden Abstandsmaterials hindurchgehen können. Beispielsweise hindurchgedrückt oder hindurchgepresst werden können.

Bevorzugt ist es jedoch, dass ein solches Abstandsmaterial verwendet wird, das eine Lage aufweist, die Öffnungen besitzt, welche das Einbringen der Teilchen durch die Öffnungen ermöglichen. Diese Öffnungen können webtechnisch oder wirktechnisch ausgebildet sein.

In diesem Zusammenhang ist es dann weiter bevorzugt, dass die solche Öffnungen aufweisende Lage durch eine Abdeckung gegen Herausfallen oder Herausdringen der Latentwärmespeichermaterial-Teilchen verschlossen ist.

Der Verschluss kann in unterschiedlicher Weise erreicht sein. Bspw. durch die Abdeckung mittels einer Folie oder durch die Abdeckung mittels eines engmaschigen weiteren Textils. Hierbei kann die Folie oder das Textil auch in unterschiedlichen Weisen mit dem Grundmaterial verhaftet sein. Es kann im Falle des Textils, aber auch im Falle der Folie mit dem Grundmaterial nähtechnisch verbunden sein. Auch beispielsweise versteppt sein, um so gleichsam einzelne Abteilungen zu schaffen. Hierbei können diese Steppnähte durch das Abstandsmaterial hindurchgehen, um dort die Abteilungsbildung zu ermöglichen.

Darüber hinaus können die Abdeckungen auch auf das Abstandsmaterial aufkaschiert sein. Etwa durch gewisses Erhitzen des gegebenenfalls thermoplastische Fasern aufweisenden Abstandsmaterials und/oder der Abdeckung, die dann durch nachfolgendes Aufwalzen oder Aufdrücken örtlich eine enge Verbindung, gleichsam eine Verschweißung miteinander eingehen. Auch kann eine übliche Verklebung vorgesehen sein.

Nachstehend ist die Erfindung des Weiteren anhand der beigefügten Zeichnung, die jedoch lediglich ein Ausführungsbeispiel darstellt, wiedergegeben. Hierbei zeigt:
- Fig. 1: in schematischer perspektivischer Darstellung ein Abstandsgewirke mit wirktechnisch ausgebildeten Öffnungen in einer der Lagen;
- Fig. 2: den Gegenstand gemäß Fig. 1, nach dem Latentwärmekörper-Teilchen eingebracht wurden, mit einer Abdeckung.

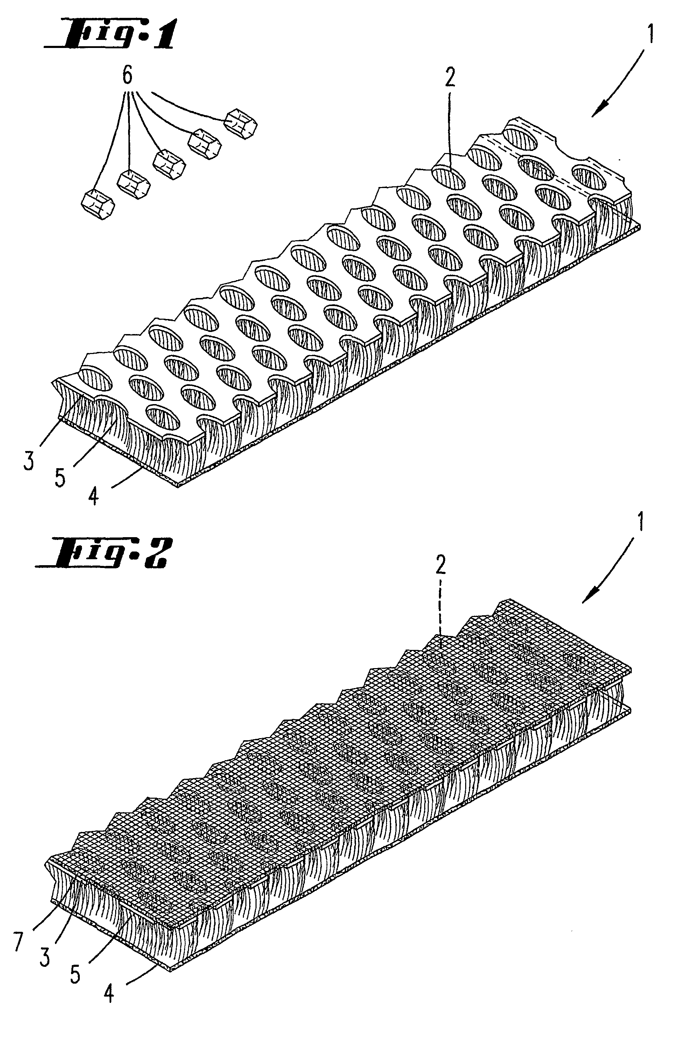

Dargestellt und beschrieben ist zunächst mit Bezug zu Fig. 1 ein wirktechnisch hergestelltes textiles Abstandsmaterial 1, das wirktechnisch ausgebildete Öffnungen 2 in der oberen Lage 3 aufweist. Darüber hinaus ist eine untere Lage 4 vorhanden, welche Lagen durch Abstandsfäden 5 voneinander beabstandet sind.

In die Öffnungen 2 werden, wie schematisch gleichfalls angedeutet, Latentwärmespeicherkörper-Teilchen 6 eingegeben.

Um diese Latentwärmespeicherkörper-Teilchen 6 in dem Abstandsgewirke auf Dauer festzuhalten, ist im Weiteren, vgl. Fig. 2, eine Abdeckung 7 vorgesehen. Beim Ausführungsbeispiel besteht diese Abdeckung aus einer enggewirkten Einzellage, hinsichtlich ihrer Maschenöffnungen etwa gleich der unteren Lage 4. Diese Abdeckung 7 ist mittels eines im Einzelnen nicht dargestellten Klebstoffes auf die obere Lage 3 des Abstandsgewirkes 1 aufgebracht und damit dauerhaft verhaftet. Es handelt sich um einen Klebstoff, welcher auch waschmaschinenfest ist.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Mehrlagiges textiles Abstandsmaterial, wie insbesondere Abstandsgewebe oder Abstandsgewirke, **gekennzeichnet durch** zwischen den Lagen angeordnete Teilchen eines Latentwärmespeichermaterials, wobei das Latentwärmespeichermaterial mit einem Verdickungsmittel versetztes Paraffin ist.

2. Abstandsmaterial nach Anspruch 1, **dadurch gekennzeichnet, dass** das Abstandsmaterial mindestens eine Lage aufweist, die Öffnungen besitzt, welche das Eindringen der Teilchen durch die Öffnungen ermöglichen.

3. Abstandsmaterial nach einem oder mehreren der vorhergehenden Ansprüche, **dadurch gekennzeichnet, dass** die Öffnungen aufweisende Lage mittels einer Abdeckung gegen ein Herausfallen der Teilchen verschlossen ist.

4. Abstandsmaterial nach einem oder mehreren der vorhergehenden Ansprüche, **dadurch gekennzeichnet, dass** die Abdeckung eine Folie ist.

5. Abstandsmaterial nach einem oder mehreren der vorhergehenden Ansprüche, **dadurch gekennzeichnet, dass** die Abdeckung eine engmaschige Texrillage ist.

6. Abstandsmaterial nach einem oder mehreren der vorhergehenden Ansprüche, **dadurch gekennzeichnet, dass** die Teilchen des Latenwärmespeichermaterials eine größte Abmessung von 1 bis 10 mm aufweisen.

## Claims

1. A multi-ply textile spacer material, in particular a woven spacer fabric or a loop-formingly knitted spacer fabric, **characterized by** particles of a latent heat storage material disposed between the plies, the latent heat storage material being paraffin admixed with a thickener.

2. A spacer material according to Claim 1, **characterized by** the spacer material having at least one ply which possesses openings which enable the particles to penetrate through the openings.

3. A spacer material according to one or more of the preceding claims, **characterized by** the ply having openings being sealed by means of a cover against the particles falling out.

4. A spacer material according to one or more of the preceding claims, **characterized by** the cover being a film or foil.

5. A spacer material according to one or more of the preceding claims, **characterized by** the cover being a close-meshed textile ply.

6. A spacer material according to one or more of the preceding claims, **characterized by** the particles of the latent heat storage material having a largest dimension of 1 to 10 mm.

## Revendications

1. Matériau textile de séparation multicouche, comme en particulier un tissu de séparation ou un tricot de séparation, **caractérisé par** des particules de matière de stockage de chaleur latente disposées entre les couches, la matière de stockage de chaleur latente étant une paraffine mélangée avec un agent épaississant.

2. Matériau de séparation selon la revendication 1, **caractérisé en ce que** le matériau de séparation présente au moins une couche ayant des ouvertures, lesquelles permettent la pénétration des particules à travers les ouvertures.

3. Matériau de séparation selon une ou plusieurs des revendications précédentes, **caractérisé en ce que** la couche présentant des ouvertures est obstruée au moyen d'un revêtement contre la chute des particules.

4. Matériau de séparation selon une ou plusieurs des revendications précédentes, **caractérisé en ce que** le revêtement est une feuille.

5. Matériau de séparation selon une ou plusieurs des revendications précédentes, **caractérisé en ce que** le revêtement est une couche textile à mailles serrées.

6. Matériau de séparation selon une ou plusieurs des revendications précédentes, caractérisée ce que les particules de matière de stockage de chaleur latente présentent une taille maximale de 1 à 10 mm.
